# EUROPÄISCHE PATENTANMELDUNG

(11) **EP 1 586 715 A1**
(43) Veröffentlichungstag der Anmeldung: **19.10.2005**
(21) Anmeldenummer: 05006861.8
(22) Anmeldetag: 30.03.2005
(51) Int. Cl.: E04B 1/80, F16L 59/065

(54) **Evakuierbare Bodenplatte**

(30) Priorität: 14.04.2004 DE 202004005887 U
(71) Anmelder: Viessmann Kältetechnik AG, 95030 Hof/Saale (DE)
(72) Erfinder: Haussner, Dietmar, 07356 Saaldorf (DE); Greiner, Helmut, 07929 Saalburg (DE)
(74) Vertreter: Wolf, Günter

(57) **Zusammenfassung**

Die Erfindung betrifft eine evakuierbare Bodenplatte für insbesondere Kühl- und Frischhaltezellen, bestehend aus zwischen einer Begeh- und Befahrplatte (1) und einer Bodenauflageplatte (2) angeordnetem Isoliermaterial (3), wobei der von beiden Platten (1,2) begrenzte Innenraum (4) ringsum mit einem Seitenrandprofil (5) abgedichtet und eine der beiden Platten (1,2) mit Einrichtungen in Form einer mit einem Deckel (6) verschließbaren Öffnung (7) zur Evakuierung des Innenraumes (4) ausgestattet ist. Nach der Erfindung ist die Öffnung (7) als Öffnung einer in den Innenraum(4) weisenden Eintiefung (8) in oder an der betreffenden Platte (1 oder 2) ausgebildet. In dieser Eintiefung (8) ist ein mit dem Innenraum (4) in Verbindung stehendes Rückschlagventil (9) mit Anschluß (10) für eine Absaugleitung angeordnet ist.

## Beschreibung

Die Erfindung betrifft eine evakuierbare Bodenplatte für insbesondere Kühl- und Frischhaltezellen, bestehend aus zwischen einer Begeh- und Befahrplatte und einer Bodenauflageplatte angeordnete Isoliermaterial, wobei der von beiden Platten begrenzte Innenraum ringsum mit einem Seitenrandprofil abgedichtet und eine der beiden Platten mit Einrichtungen in Form einer mit einem verschweißbaren Deckel verschließbaren Öffnung zur Evakuierung des Innenraumes ausgestattet ist.

Evakuierbare Bauteile dieser Art sind bspw. nach dem DE-A-94 09 980 U1 und auch nach der DE-A-196 02 940 A1 bekannt.
Beim Gegenstand dem DE-A-94 09 980 U1 handelt es sich allerdings nicht direkt um solche evakuierbare Bodenplatten selbst, sondern um eine Vorrichtung zur Herstellung von thermischen Isolierkörpern, wobei aber auch wie beim Gegenstand der DE-A-196 02 940 davon ausgegangen ist, eine Öffnung in einem zu evakuierenden Bauteil mit einer entsprechend angepaßten Verschlußplatte zu verschließen, die beim Evakuieren mittels der Vorrichtung auf einer Dichtung festgesaugt wird. Gemäß dem DE-A-94 09 980 U1 ist vorgesehen, die Verschlußplatte fest und hermetisch dicht mit dem Rand der Öffnung in der betreffenden Seitenwand des Bauteiles zu verbinden, und zwar offenbar materialabhängig mit einer in die Vorrichtung einbezogenen, sogenannten Elektronenstrahlkanone, während, soweit zutreffend bekannt, beim Verschluß nach der DE-A-196 02 940 auch ein Verschweißen des Verschlußdeckels nach erfolgter Evakuierung in Betracht gezogen ist, bei welchem Verschluß aber auch eine ähnliche Evakuiervorrichtung erforderlich ist, die im aufgesetzten zustand den ganzen Verschlußbereich erfassen können muß.

Der Erfindung liegt die Aufgabe zugrunde, Bauteile bzw. insbesondere Bodenplatten für den eingangs genannten Zweck und der eingangs genannten Art hinsichtlich ihrer Evakuierbarkeit dahingehend umzugestalten und zu verbessern, daß unter Ausschluß irgendwelcher hervorstehender Anschlußteile aus den Plattenebenen und von Hilfsvorrichtungen der vorgenannten Art ein Direktanschluß einer Vakuumanschlußleitung ermöglicht ist.

Diese Aufgabe ist mit einer Bodenplatte der eingangs genannten Art nach der Erfindung dadurch gelöst, daß die Öffnung als Öffnung einer in den Innenraum weisenden Eintiefung in oder an der betreffenden Platte ausgebildet ist und daß in dieser Eintiefung ein mit dem Innenraum der Bodenplatte in Verbindung stehendes Rückschlagventil mit Anschluß für eine Absaugleitung angeordnet ist.

Diese Lösung schließt zwei grundsätzliche Ausführungsformen ein, nämlich zum Einen die Präge- bzw. Tiefziehausformung der Eintiefung in einer der die Großflächen der den Bodenflächenzuschnitt bildenden Bleche, und zwar vorzugsweise in der begehseitigen Platte, und zum Anderen die Ausbildung der Eintiefung in einem zur Platte separaten Teil, das in einen entsprechenden Öffnungsausschnitt in der betreffenden Platte vakuumdicht einsetzbar ist.

In beiden Fällen ist der von der Eintiefung gebildete Raum gegen den zu evakuierenden Bodenplatteninnenraum völlig abgegrenzt, der nur via voll im Eintiefungsraum untergebrachten, also nicht aus diesem herausragenden Rückschlagventil zugänglich ist. Der Begriff Rückschlagventil ist bzgl. seiner Anordnung in der Eintiefung bzw. seiner Zuordnung zum Innenraum der Bodenplatte so zu verstehen, daß dieses von einer entsprechend dimensionierten Feder in Schließstellung gehalten wird, d.h., es handelt sich um ein handelserhältliches KFZ-Reifenventil.

Der Anschluß einer Vakuumsaugleitung erfolgt direkt am Rückschlagventil, wobei die vakuumleitung nach Vollzug der Eva kuierung einfach wieder losgeschraubt wird, d.h., die Verwendung irgendwelcher Hilfsvorrichtungen der einleitend genannten Art ist entbehrlich. Anschließend wird einfach der an den Öffnungsquerschnitt der Eintiefung angepaßte Verschlußdeckel aufgelegt und ringsum verschweißt.

Vorteilhafte Weiterbildung und Ausführungsformen ergeben sich nach den Unteransprüchen, von denen insbesondere die folgenden bevorzugt werden:

Das Rückschlagventil ist mit einem Anschlußröhrchen versehen und mit diesem Röhrchen mit dem Innenraum der Bodenplatte verbunden, wober ferner das Anschlußröhrchen aus biegsamen metallischem Material gebildet sein kann, was zum einen die Einbringung in die Eintiefung und die vakuumdichte Einbindung in die seitliche, in den Innenraum der Bodenplatte führende Öffnung der Eintiefung erleichtert und zum Anderen auch den anschraubbaren Anschluß einer Vakuumleitung, da das Rückschlagventil Dank des biegsamen Röhrchens etwas aus der Eintiefung herausgebogen und nach der Evakuierung wieder zurückgedrückt werden kann.

Ferner ist das Rückschlagventil mit einer aufschraub- und abdichtbaren Abdeckkappe versehen, die nach Abkoppeln der Vakuumsaugleitung zusätzlich abdichtend aufgeschraubt wird und eine zusätzliche Sicherheit für den Erhalt des angelegten Vakuums darstellt, und zwar insbesondere für die Zwischenphase bis der das Ganze abdeckende Deckel ringsum verschweißt ist.

Die erfindungsgemäße Bodenplatte und weitere vorteilhafte Ausführungsformen werden nachfolgend anhand der zeichnerischen Darstellung von Ausführungsbeispielen näher erläutert.

Es zeigt
- Fig.1: eine Draufsicht auf eine Bodenplatte mit zugehöri-Schnitten längs der Linien I-I und II-II;
- Fig.2: einen Schnitt durch ein separates, die Eintiefung enthaltenes Bauteil;
- Fig.3: eine Draufsicht auf das Bauteil gemäß Fig.2;
- Fig.4: perspektivisch das Bauteil gemäß Fig. 2,3 mit zugehörigem Rückschlagventil;
- Fig.5: einen Schnitt durch eine besondere Ausfü+hrungsform der Eintiefung;
- Fig.6: eine Draufsicht auf die Ausführungsform nach Fig.5 bei entferntem Deckel;
- Fig.7: eine Draufsicht auf die Ausführungsform nach Fig.5 mit einer anderen Draufsichtform;
- Fig.8: im Teilschnitt eine weitere Ausführungsform und
- Fig.9: im Schnitt eine weitere besondere Ausführungsform.

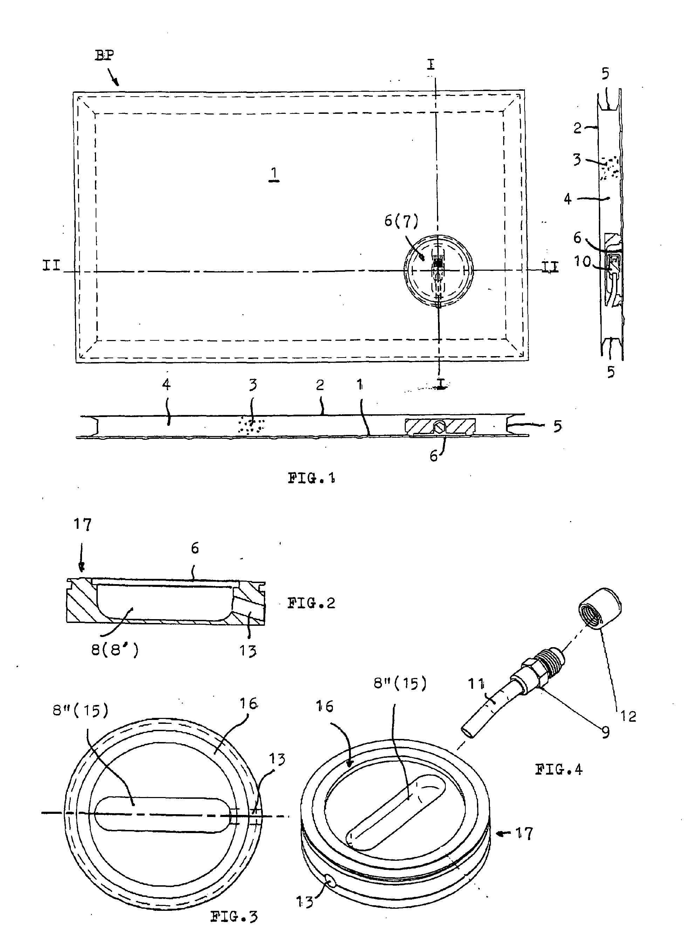

Die evakuierbare Bodenplatte BP besteht unter Verweis auf Fig.1 nach wie vor aus zwischen einer Begeh- und Befahrplatte 1 und einer Bodenauflageplatte 2 angeordnetem Isoliermaterial 3, wobei der von beiden Platten 1,2 begrenzte Innenraum 4 ringsum mit einem Seitenrandprofil 5 abgedichtet und eine der beiden Platten 1,2 mit Einrichtungen in Form einer mit einem verschweißbaren Deckel 6 erschließbaren Öffnung 7 zur Evakuierung des Innenraumes 4 ausgestattet ist.

Für die Bodenplatte PB ist nun gemäß Erfindung wesentlich, daß die Öffnung 7 als Öffnung einer in den Innenraum 4 weisenden Eintiefung 8 in oder an der betreffenden Platte (hier Begehplatte 1) ausgebildet und in dieser ein mit dem Innenraum 4 in Verbindung stehendes Rückschlagventil 9 mit Anschluß 10 für eine Absaugleitung angeordnet ist.

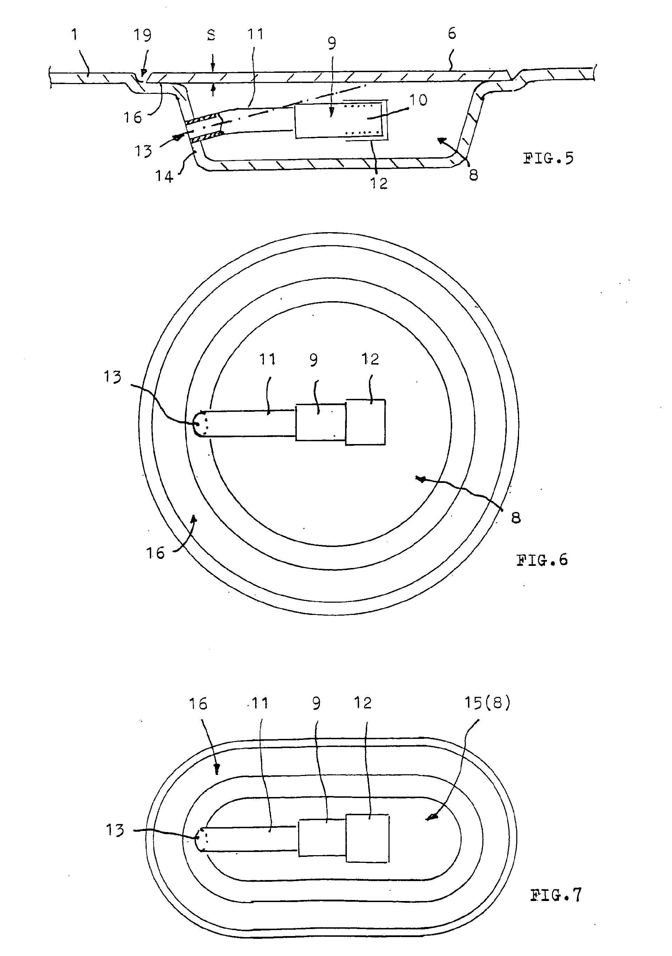

Wie in den Fig.4 bis 7 dargestellt, ist das Rückschlagventil 9 aus den genanten Gründen mit einem Anschlußröhrchen 11 versehen und mit diesem Röhrchen 11 mit dem Innenraum 4 der Bodenplatte PB verbunden, welches Anschlußröhrchen 11 aus biegsamen metallischem Material gebildet ist und aus einer Schrägstellung (siehe strichpunktierte Linie in Fig.5) problemlos in die in Fig.5 dargestellte Position zurückgedrückt werden kann. Ferner ist das Rückschlagventil 9 mit einer aufschraub- und abdichtbaren Abdeckkappe 12 versehen, in der innen eine nicht besonders dargestellte Dichtung angeordnet ist und die bzgl. ihrer abdichtenden Position natürlich so bemessen ist, daß das Ventil geschlossen bleibt.

Unter Verweis auf Fig.5 kann die Eintiefung 8 kreisförmig und flach schalenförmig ausgebildet sein, wobei in einer Öffnung 13 der Schalenseitenwand 14 das Rückschlagventil 9 mit seinem Anschlußröhrchen 11 vakuumdicht eingebunden bzw. eingelötet ist. Die Eintiefung 8 kann aber auch in Form einer Rinne 15 ausgebildet sein, wobei auch hier das Rückschlagventil 9 in einer Öffnung 13 an einem Ende der Rinne 15 mit seinem Anschlußröhrchen 11 vakuumdicht eingebunden ist.

Für alle Ausführungsformen ist ferner vorteilhaft vorgesehen, daß rings um die Eintiefung 8 ein ringförmiger Auflagerand 16 für den einschweißbaren Öffnungsverschlußdeckel 6 eingekröpft bzw. eingearbeitet ist, wobei der ringförmige Auflagerand 16 mit einer der Stärke S des Deckels 6 entsprechenden Tiefe bemessen ist.

Bei den Ausführungsformen nach den Fig.5 bis 7 handelt es sich um die, bei denen die Eintiefung 8 direkt in die Platte 1 mit einem entsprechenden Formwerkzeug eingeprägt bzw. eingepreßt ist. Diese Einprägung ist insofern herstellungsmäßig besonders zweckmäßig ist, derartige Begehplatten 1 in der Regel aus Gründen der Rutschfestigkeit per se mit einer entsprechenden Flächenstrukturierung verpreßt werden.

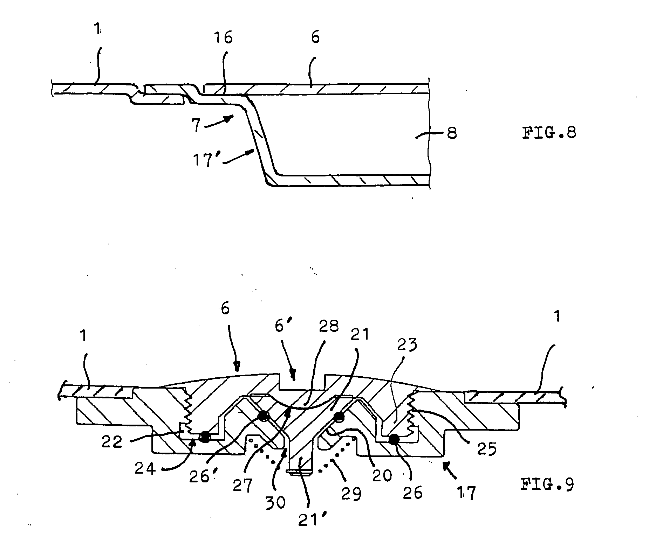

Die in Fig.6 dargestellte Kreisform der Eintiefung 8 ist nicht zwingend, d.h., die Eintiefung 8 kann unter Verweis auf Fig.7 auch langloch- bzw. rinnenförmig vorgesehen werden, was sogar bevorzugt wird, da diese Form gewissermaßen einen richtungsorientierenden Effekt für die vorerwähnte Aufbiegung bzw. Rückbiegung des Röhrchen 11 hat.

Es ist aber unter Verweis auf die Fig. 2 bis 4 auch möglich, die Eintiefung 8 in einem zur betreffenden Platte separaten Teil 17 anzuordnen und dieses Teil 17 in einer dazu passend bemessenen Öffnung 18 der Platte 1 vakuumdicht einzubinden. Wie dargestellt, ist für diese Ausführungsform das separate Teil 17 als flach-zylindrisch Scheibe ausgebildet, wobei in dieser die Eintiefung 8 die Form einer kreisförmigen oder rinnenförmigen Eintiefung 8',8" haben kann.

Auch bei dieser Ausführungsform ist das separate Teil 17 mit einem eingetieften Einsatzrand 16 für den kreisförmigen Deckel 6 versehen, dessen Umfangsrand im übrigen vorteilhaft mit einer Anfasung 19 (siehe Fig.5) versehen ist, um eine Nut für die Verlegung der Deckelschweißnaht zu schaffen.

Bzgl. des Teiles 17 sei darauf hingewiesen, daß die als Drehteil in den Fig. 1 bis 3 dargestellte Ausführungsform dieses Teiles 17 selbstverständlich im Sinne der Fig.5,6 aber auch 7 durchaus auch als separates Preßteil 17' ausgebildet sein kann und mit einer Umfangsrandgestaltung im Sinne der mit entsprechenden Bezugszeichen versehenen Fig.8.

Bei der Ausführungsform nach Fig.9 ist im separaten Teil 17 zentrisch ein Kegelventilsitz 20 mit federbelasteten Schließkegel 21 und ferner ist im Teil 17 eine den Kegelventilsitz 20 umfassende Ringnut 22 angeordnet, in die ein Rinsteg 23 des Deckels 6 gegen den Boden 24 der Ringnut 22 abdichtbar eingreift. Der Ventilkegel 21 weist außerdem einen die eigentliche Absaugöffnung 30 mit ausreichendem Spiel durchgreifenden Fortsatz 21' auf, zwischen dem und dem Teil 17, wie dargestellt eine Druckfeder 29 verspannt angeordnet ist. Die Außenflanken der Ringnut 22 und des Ringsteges 23 sind dabei mit Gewinde 25 versehen, und am Boden 24 der Ringnut 22 ist ein Dichtungsring 26 angeordnet. Außerdem ist auch der Kegelventilsitz 20, wie dargestellt, mit einem solchen Dichtungsring 26' versehen. Die Evakuierung erfolgt mit einem in die Nut 22 passenden Absaugstutzen (nicht dargestellt). Nach Beendigung der Evakuierung der Bodenplatte schließt sich automatisch das Ventil.
Der mit einem Schraubendreherschlitz oder mit einem Innensechskant 6' versehene und nach außen mit einer sehr flachen Wölbung in Erscheinung tretende Deckel 6 wird unter zusätzlichem Wirksamwerden des Dichtungsringes 26 fest aufgeschraubt. Vorteilhaft ist außerdem der Schließkegel 21 mit einer Zentrierkalotte 27 versehen, in die eine formangepaßte Auswölbung 28 auf der Deckelinnenseite eingreift.

## Patentansprüche

1. Evakuierbare Bodenplatte für insbesondere Kühl- und Frischhaltezellen, bestehend aus zwischen einer Begeh- und Befahrplatte (1) und einer Bodenauflageplatte (2) angeordnetem Isoliermaterial (3), wobei der von beiden Platten (1,2) begrenzte Innenraum (4) ringsum mit einem Seitenrandprofil (5) abgedichtet und eine der beiden Platten (1,2) mit Einrichtungen in Form einer mit einem Deckel (6) verschließbaren Öffnung (7) zur Evakuierung des Innenraumes (4) ausgestattet ist,
**dadurch gekennzeichnet,**
**daß** die Öffnung (7) als Öffnung einer in den Innenraum(4) weisenden Eintiefung (8) in oder an der betreffenden Platte (1 oder 2) ausgebildet ist und daß in dieser Eintiefung (8) ein mit dem Innenraum (4) in Verbindung stehendes Rückschlagventil (9) mit Anschluß (10) für eine Absaugleitung angeordnet ist.

2. Bodenplatte nach Anspruch 1,
**dadurch gekennzeichnet,**
**daß** das Rückschlagventil (9) mit einem Anschlußröhrchen (11) versehen und mit diesem Röhrchen (11) mit dem Innenraum (4) verbunden ist.

3. Bodenplatte nach Anspruch 1 oder 2,
**dadurch gekennzeichnet,**
**daß** das Anschlußröhrchen (11) aus biegsamen metallischem Material gebildet ist.

4. Bodenplatte nach einem der Ansprüche 1 bis 3,
**dadurch gekennzeichnet,**
**daß** das Rückschlagventil (9) mit einer aufschraub- und abdichtbaren Abdeckhaube (12) versehen ist.

5. Bodenplatte nach einem der Ansprüche 1 bis 4,
**dadurch gekennzeichnet,**
**daß** die Eintiefung (8) kreisförmig und flach schalenförmig ausgebildet und in einer Öffnung (13) der Schalenseitenwand (14) das Rückschlagventil (9) mit seinem Anschlußröhrchen (11) vakuumdicht eingebunden ist.

6. Bodenplatte nach einem der Ansprüche 1 bis 4,
**dadurch gekennzeichnet,**
**daß** die Eintiefung (8) in Form einer Rinne (15) ausgebildet und in einer Öffnung (13) an einem Ende der Rinne (15) das Rückschlagventil (9) mit seinem Anschlußröhrchen (11) vakuumdicht eingebunden ist.

7. Bodenplatte nach einem der Ansprüche 1 bis 6,
**dadurch gekennzeichnet,**
**daß** rings um die Eintiefung (8) ein ringförmiger Auflagerand (16) für den einschweißbaren Öffnungsverschlußdeckel (6) eingekröpft ist.

8. Bodenplatte nach Anspruch 7,
**dadurch gekennzeichnet,**
**daß** der ringförmige Auflagerand (16) mit einer der Stärke (S) des Deckels (6) entsprechenden Tiefe bemessen ist.

9. Bodenplatte nach einem der Ansprüche 1 bis 4,
**dadurch gekennzeichnet,**
**daß** die Eintiefung (8) in einem zur betreffenden Platte separaten Teil (17) angeordnet und dieses Teil (17) in einer dazu passend bemessenen Öffnung (18) der betreffenden Platte (1,2) vakuumdicht eingebunden ist.

10. Bodenplatte nach Anspruch 9,
**dadurch gekennzeichnet,**
**daß** das separate Teil (17) als flach-zylindrisch Scheibe ausgebildet und in dieser die Eintiefung (8) in Form einer zylindrischen oder rinnenförmigen Eintiefung (8'',8") ausgebildet ist.

11. Bodenplatte nach Anspruch 9 oder 10,
**dadurch gekennzeichnet,**
**daß** das separate Teil (17) mit einem eingetieften Einsatzrand (16) für den kreisförmigen, eine Anfasung (19) aufweisenden Deckel (6) versehen ist.

12. Bodenplatte nach Ansprüchen 1 und 9,
**dadurch gekennzeichnet,**
**daß** im separaten Teil (17) zentrisch ein Kegelventilsitz (20) mit federbelasteten Schließkegel (21) und im Teil (17) einen den Kegelventilsitz (20) umfassende Ringnut (22) angeordnet ist, in die ein Rinsteg (23) des Deckels (6) gegen den Boden (24) der Ringnut (22) abdichtbar eingreift, und daß die Außenflanken der Ringnut (22) und des Ringsteges (23) mit Gewinde (25) versehen sind und am Boden (24 der Ringnut (22) ein Dichtungsring (26) angeordnet ist.

13. Bodenplatte nach Anspruch 12,
**dadurch gekennzeichnet,**
**daß** der Schließkegel (21) mit einer Zentrierkalotte (27) versehen ist, in die eine formangepaßte Auswölbung (28) auf der Deckelinnenseite eingreift.
